Europäisches Patentamt

European Patent Office

Office européen des brevets

(19)

(11) Veröffentlichungsnummer: **0 084 590**
**B1**

(12) ## EUROPÄISCHE PATENTSCHRIFT

(45) Veröffentlichungstag der Patentschrift:
**27.11.85**

(51) Int. Cl.⁴: **H 01 G 9/12,** H 01 G 1/02

(21) Anmeldenummer: **82106914.3**

(22) Anmeldetag: **30.07.82**

(54) Kondensatorbechergehäuse, Verfahren und Vorrichtung zu seiner Herstellung.

(30) Priorität: **22.01.82 DE 3201963**

(43) Veröffentlichungstag der Anmeldung:
**03.08.83 Patentblatt 83/31**

(45) Bekanntmachung des Hinweises auf die Patenterteilung:
**27.11.85 Patentblatt 85/48**

(84) Benannte Vertragsstaaten:
**DE FR GB IT NL SE**

(56) Entgegenhaltungen:
**FR - A - 2 330 151**
**US - A - 3 204 156**
**US - A - 3 826 412**
**US - A - 4 175 166**

(73) Patentinhaber: **Klaschka, Rudolf, Tannenweg 9,
D-7896 Wutöschingen 3 (DE)**

(72) Erfinder: **Klaschka, Rudolf, Tannenweg 9,
D-7896 Wutöschingen 3 (DE)**

(74) Vertreter: **Jaeger, Klaus, Dr., JAEGER & PARTNER
Patentanwälte Bergstrasse 48 1/2,
D-8035 München-Gauting (DE)**

## Beschreibung

Die Erfindung betrifft ein Kondensatorbechergehäuse gemäss Oberbegriff des Anspruches 1 sowie ein Verfahren zur Herstellung dieses Kondensatorbechergehäuses und eine Vorrichtung zur Durchführung des Verfahrens.

Der Begriff „Kondensatorbechergehäuse", bzw. im folgenden auch kurz "Bechergehäuse" genannt, schliesst dabei nicht nur die in der Regel zylindrischen einseitig geschlossenen Bechergehäuse ein, sondern umfasst auch beidseitig offene Bechergehäuse sowie Gehäuse mit nicht rundem Querschnitt.

Die Anbringung einer Sollberststelle an einem Bechergehäuse ist eine Sicherheitsmassnahme, die bei Überlastung des Kondensators und Auftreten eines kritischen Überdruckes in dem verschlossenen Kondensatorgehäuse das Bechergehäuse durch Einreissen öffnet und so verhindern soll, dass der Kondensator explosionsartig platzt oder dass sein Verschlussdeckel geschossartig aus seiner Verankerung im geschlossenen Bechergehäuse herausgeschleudert wird.

Die Sollberststelle, die durch eine Wandschwächung erzielt wird, muss dabei so ausgelegt werden, dass die schwächste stehenbleibende Wandstärke noch ausreicht, um eine absolute Dichtheit und Permeationsfestigkeit des Bechergehäuses bis zum vorgegebenen kritischen Grenzdruck zu gewährleisten.

Bei der bisherigen Herstellung der schlitzartigen Wandschwächung wird durch das angewandte Stanzschneiden Material verdrängt und wallartig oder gratartig zu beiden Seiten des erzeugten Schlitzes aufgeworfen. Derartige Grathöhen von etwa 0,1 mm bis etwa 0,3 mm bei einem Durchmesser des Bechergehäuses von etwa 6 bis 8 cm wirken sich jedoch vor allem bei automatischen Fertigungsstrassen für Kondensatoren störend aus. Ein zusätzlicher Bearbeitungsschritt zum Abstechen oder Abschleifen der Grathöhe verteuert den in Massenfertigung hergestellten Kondensator in der Relation unverhältnismässig.

Zur Vermeidung eines zweiten Bearbeitungsschrittes kann man daher den Weg gehen, das Kondensatorbechergehäuse auf einen profilkomplementären, ungefähr passgenauen Haltedorn aufzuziehen und mit einer Stanzschneide von aussen eine Wandschwächung auszubilden, wie bekannt aus der US-A Nr. 4175166. Dabei kann der der Stanzschneide gegenüberliegende Bereich des Haltedorns als planer Oberflächenbereich ausgebildet sein, während in allen anderen Bereichen die Innenwand des auf den Haltedorn aufgezogenen Bechergehäuses bisher genau und flächenbündig aufliegt. Beim Absenken der Stanzschneide findet daher zunächst eine Biegeverformung der Becherwand statt. Diese Biegeverformung wird durch die Anlage der Innenwand des Bechergehäuses an der abgeflachten Oberfläche des Haltedorns beendet. Bei einem weiteren Absenken der Schneide tritt dann das Stanzen des Schlitzes, also das Schneidstanzen, unter Fliessen des Werkstoffs der Becherwandung ein. Dabei werden in unvermeidbarer Weise die Stanzgrate zu beiden Seiten des gestanzten Schlitzes aufgeworfen.

Durch die Verformung der Becherwand vor dem Stanzen wird dabei erreicht, dass die aufgeworfenen Stanzgrate nun nicht mehr über den äusseren Umfangskreis des Bechergehäuses vorstehen, sondern innerhalb dieser Begrenzung liegen. Die Abflachung des Haltedorns wird vorzugsweise so flach gewählt, dass die höchsten Erhebungen des Stanzgrates gerade innerhalb der oder höchstens auf dem äusseren Umfangskreis der Becherwandung liegen. Bei einer mittleren Stanzgrathöhe von etwa 0,1 mm wird auch die plane Abflachung des Haltedorns etwa 0,1 mm oder nur wenig darüber betragen. Für die Herstellung zylindrischer Bechergehäuse aus Aluminium mit Durchmessern bis zu etwa 10 cm liegt die Oberfläche der planen Abflachung des im übrigen zylindrischen Haltedorns vorzugsweise 0,05 mm bis 0,5 mm unter dem Scheitel der fiktiven Zylindermantelfläche des Haltedorns.

Bei dieser Realisierung erstreckt sich die plane Abflachung des Haltedorns in ihrer Längsrichtung parallel zur Längsachse des Haltedorns. Die Längsachse der Abflachung, die Stanzschneide und die Längsachse des Haltedorns werden vorzugsweise parallel zueinander ausgerichtet. Hierdurch verläuft die schlitzartige Wandschwächung parallel zur Längsachse des Bechergehäuses. Der abgeflachte Oberflächenbereich kann bei dieser Ausführungsform sowohl über die gesamte axiale Länge des Haltedorns als auch nur über die Länge des Stanzbereiches ausgebildet sein.

Bei der vorgenannten Ausführungsform bilden ten sich an den Seiten der Wandschwächung einerseits Stanzgrate. Andererseits wurden durch Fliessen des Materials im Bereich der Wandschwächung Verformungsspannungen und Verformungsfestigungen bewirkt, so dass die Sollberststelle auf eine sehr geringe Wandstärke z.B. im Bereich von 0,06 mm bis 0,08 mm reduziert werden musste. Ein weiterer ungünstiger Aspekt besteht darin, dass die Druckauswirkung in den nach aussen gewölbten Bereichen des Biegeverformungsbereiches zur Geltung kommt und nicht an der vorgesehenen Sollberststelle.

Der Erfindung liegt daher die Aufgabe zugrunde, ein Kondensatorbechergehäuse mit grösserer Restwandstärke an der Sollberststelle unter weitgehender Vermeidung von äusseren Materialwülsten und einer Verformungsverfestigung im Bereich der Sollberststelle zu schaffen. Auch ein Verfahren zur Herstellung des Kondensatorbechergehäuses und eine Vorrichtung zur Durchführung dieses Verfahrens wird durch die Erfindung aufgezeigt.

Diese Aufgabe wird bei einem gattungsgemässen Kondensatorbechergehäuse durch die Merkmale des kennzeichnenden Teils des Anspruchs 1 gelöst.

Zur Vermeidung der äusseren Materialwülste und auch eines grösseren Fliessens von Material bei der Herstellung, was zu einer Verformungsverfestigung in diesem Bereich führt, wird bei dem erfindungsgemässen Kondensatorbechergehäuse die Sollberststelle in einem Tiefziehbereich vorgesehen. Die in dem für die Sollberststelle vorgesehenen Bereich tiefgezogene Becherwandung wird dann mit mindestens einer axial verlaufenden, schlitzartigen Vertiefung versehen. Die durch das Tiefziehen bewirkte Schwächung der Becherwandstärke wird durch die Ausbildung der schlitzartigen Vertiefung etwas ausgeglichen. Bei diesem Vorgang werden die nachteiligen Verformungsverfestigungen, die vor allem durch Fliessen des Materials bewirkt werden, vermieden. Dies erlaubt es, die Restwandstärke der Sollberststelle stärker auszulegen, als man es bisher realisieren konnte. Vorzugsweise wird dabei eine Restwandstärke von etwa 0,12 mm bis 0,13 mm erreicht, während bei nach den früheren Verfahren hergestellten Kondensatorbechergehäusen für einen Auslösedruck von 14 ± 2 bar eine Restwandstärke von etwa 0,06 mm bis 0,08 mm erforderlich war. Diese Erhöhung der Restwandstärke an der Sollberststelle um nahezu den Faktor 2 verbessert damit die Permeationsfestigkeit des Bechergehäuses und stellt andererseits eine grössere fertigungstechnische Sicherheit, vor allem in den automatischen Bearbeitungsschritten der Massenfertigung, dar.

Im Vergleich zu dem vorausgehend beschriebenen Kondensatorbechergehäuse weist das erfindungsgemässe Bechergehäuse einen relativ eng begrenzten, genauen Bereich für die Wandungsschwächung und die Sollberststelle auf, was durch das Tiefziehen in einer relativ schmalen Nut bewirkt ist. Dadurch, dass bei dem tiefgezogenen Bechergehäuse Spannungs- und Verformungsverfestigungen im wesentlichen vermieden werden, stellt die Sollberststelle tatsächlich auch den Bereich mit der geringsten Wandfestigkeit dar, so dass sich ein Bersten durch Überdruck sicherheitsmässig nur an der vorgesehenen Stelle, nämlich der Sollberststelle, auswirkt.

Diese Art der Sollberststelle kann vorteilhafterweise in Bechergehäusen von Kondensatoren mit beispielsweise einem Aussendurchmesser von 12 mm, 25 mm oder von 35 bis 40 mm bei entsprechenden Wandstärken von 0,35, 0,40 bzw. 0,45 mm realisiert werden. Die konvexe Gestaltung der Aussenwandung der Sollberststelle und die etwa geradlinige Ausbildung der Innenwandung hat den Vorteil, dass diese Bechergehäuse auch in der Massenfertigung leicht auf den Haltedorn aufziehbar bzw. abnehmbar sind. Unterstützend kommt für die leichtere Handhabung bei der Fertigung hinzu, dass der Innendurchmesser des Bechergehäuses bei einem Aussendurchmesser von etwa 12 mm gegenüber dem Durchmesser des Haltedorns ungefähr ein Spiel von 1 mm aufweist. Das Tiefziehen von etwa 0,3 mm gegenüber dem normalen inneren Umfangsradius des Bechergehäuses ist dabei ohne nachteilige Beeinflussung für das spätere Einführen von Kondensatorwickel in das Innere des Bechergehäuses.

Durch die beidseitige Ausbildung einer Vertiefung in der Becherwandung, d.h. sowohl von aussen als auch von innen, wird erreicht, dass die Sollberststelle näherungsweise in der neutralen Mittelfläche der Becherwand auch nach dem Tiefziehvorgang zu liegen kommt. Insbesondere eignet sich dafür die Gestaltung des Bechergehäuses mit zwei schlitzartigen Vertiefungen von etwa gleicher Breite. Hierbei kommt vorzugsweise die Sohle der inneren Vertiefung innerhalb des Innenradius der Becherumfangswandung zu liegen, wobei bei dieser Ausbildungsform ein um etwa 0,15 mm kleinerer Radius besonders geeignet ist.

In einer anderen bevorzugten Ausführungsform ragt die innere Vertiefung über den Umfangskreis der Innenwandung des Bechergehäuses radial nach aussen, wobei bevorzugterweise ein etwa um 0,1 mm grösserer Radius als der Innenradius angestrebt wird. An der Aussenseite der Becherwandung ist in diesem Ausführungsbeispiel eine breitere Vertiefung als die innere Vertiefung vorgesehen. Die Breite des tiefgezogenen Bereiches des Bechergehäuses kann dabei vorteilhafterweise etwa 1,5 mm am Innenumfang betragen, während die Innenausbauchung durch das Tiefziehen etwa 0,3 mm in das Innere des Bechergehäuses hineinragt.

Bei der Gestaltung des Bechergehäuses derart, dass im Endzustand die Wandstärkenmitte der Sollberststelle etwa in der neutralen Mittelfläche der Becherwand nach dem Tiefziehen zu liegen kommt, werden auch Einwirkungen, die von einer grösseren Materialhärte im Randbereich des Bechergehäuses herrühren, vermieden bzw. ausgeglichen. In dieser Ausführungsform kann daher die Restwandstärke der Sollberststelle relativ genau in Abhängigkeit vom Sollberstdruck ermittelt und fertigungstechnisch auch realisiert werden.

Das Verfahren zur Herstellung des vorgenannten Kondensatorbechergehäuses ist dabei so ausgelegt, dass nach dem Aufziehen des Bechergehäuses auf den Haltedorn die Gehäusewand im Bereich der Sollberststelle tiefgezogen wird und mindestens auf einer Gehäusewandseite im tiefgezogenen Bereich ein Schlitz geformt wird. Das Bersten eines derart hergestellten Kondensatorbechergehäuses in der Restwandstärke erfolgt etwa in der Weise, dass bei dem Ansprechdruck ein Reissen der Sollberststelle durch eine entsprechende kritische Zugspannung auftritt. Die verfahrensmässige Herstellung des Bechergehäuses auf dem Haltedorn wird auch dadurch erleichtert, dass das insgesamt normalerweise tiefgezogene Bechergehäuse in den axialen Wandungen Ziehriefen im Bereich von etwa 10 bis 15 % der Wandstärke aufweist.

Eine Vorrichtung zur Durchführung des Verfahrens weist einen im wesentlichen zylindrischen Haltedorn auf, der als Innenstempel gegen einen von aussen wirkenden Aussenstempel fungiert. Der Haltedorn ist dabei mit einer Nut versehen, die sowohl über die gesamte axiale Länge, als auch nur über einen Teil der axialen Länge des Haltedorns reichen kann und die dann der Lage und Länge der für die Sollberststelle vorgesehenen Wandschwächung entspricht. Die Nut ist vorzugsweise U-förmig gestaltet, wobei sich eine Nutbreite von etwa 1,5 mm und eine Nuthöhe vom Nutboden bis zum Nutrand von etwa 0,3 mm besonders bewährt hat. Vorzugsweise ist der Nutboden als flache ebene Fläche gestaltet, von dem nahezu senkrecht stehende Nutwände zur Umfangswandung des Haltedorns ragen. Doch kann auch eine andere, beispielsweise eine mit einer Abrundung zur Achse des Haltedorns versehene Nut gewählt werden.

Der Aussenstempel der Vorrichtung ist dabei so gestaltet, dass er eine geringere Breite als die Breite der Nut aufweist. Beispielsweise kann eine Relation von 1,5 mm Breite der Nut und 0,5 mm Breite des Aussenstempels auf der Schmalseite gewählt werden. In axialer Draufsicht auf den Aussenstempel ist sein Längsprofil vorzugsweise so gestaltet, dass von einem etwa parallel zur Achse des Haltedorns verlaufenden Mittelbereich eine schräg verlaufende Abkantung zu den Schmalseiten vorgesehen ist. Der Mittelbereich weist dabei etwa eine Länge von 4 mm auf, während die Bereiche der Abkantung ungefähr 0,1 mm betragen. Beispielsweise kann der Winkel zwischen der Verlängerung des Mittelbereichs und der Abkantung etwa 30° bis 45° betragen. Der Übergang in die Schmalseite erfolgt dann unter einer Abrundung, die einen Radius von ungefähr 0,05 mm aufweist. Die Abrundung vor allen Dingen hat den Vorteil, dass Tiefzieheinstiche, die die Sicherheit der Sollberststelle beeinträchtigen, vermieden werden. Sofern der Aussenstempel als Schlitzstempel ausgebildet ist, ist der Kopf im Schmalseitenprofil etwa trapezförmig geformt.

Die Nut weist vorzugsweise einen etwa mittig angeordneten Schlitzstempel auf, der sowohl über die Gesamtlänge der Nut als auch nur im Bereich der zu formenden Sollberststelle vorgesehen sein kann. Während der Aussenstempel gekantete Randbereiche aufweist, die im Endeffekt für die konvexe Konfiguration der Aussenwandung der Sollberststelle verantwortlich ist, ist der von innen wirkende Schlitzstempel etwa über seine gesamte Länge geradlinig gestaltet und geht mit sehr kleiner Abrundung in die Schmalseiten über.

Obwohl die Vorrichtung mit einem über den Umfangskreis des Haltedorns radial hinausragenden Schlitzstempel ausgestattet sein kann, wird vorzugsweise ein in der Höhe kleinerer und unterhalb des Umfangskreises liegender Schlitzstempel gewählt, wobei bei letztgenannter Ausführungsform die Gestaltung des Aussenstempels als Schlitzstempel zusätzliche Vorteile bringt. Der innere Schlitzstempel hat vorteilhafterweise eine Höhe von etwa 0,1 mm vom Nutboden aus bei einer gesamten Nuthöhe von 0,3 mm. Es kann jedoch auch eine Höhe geringfügig unterhalb der Nuthöhe gewählt werden. Bei der Verwendung zweier gegeneinander wirkender Schlitzstempel und einer entsprechenden Ausbildung der Nut werden besonders günstige Reststärken der Sollberststelle erreicht. Die Sollberststelle liegt bei der Herstellung mit dieser Vorrichtung ungefähr im Bereich der neutralen Mittelfläche der Becherwand, so dass eine gut einstellbare Restwandstärke im wesentlichen ohne Verformungsverfestigungen und ohne durch Ziehriefen verursachte Wandstärkenschwankungen erreicht werden kann.

Die Erfindung wird nachstehend anhand teilweise schematischer Zeichnungen noch näher erläutert.

Es zeigen:

Fig. 1 ein Kondensatorbechergehäuse im Axialschnitt durch eine Sollberststelle;

Fig. 2 einen Radialschnitt durch das Bechergehäuse nach Fig. 1 entlang der Linie I-I;

Fig. 3 eine perspektivische Ansicht eines Teils eines Haltedorns mit darin ausgeprägter Nut;

Fig. 4 ein anderes Ausführungsbeispiel eines Haltedorns mit perspektivischer Ansicht eines Teils des Haltedorns im Bereich der Nut und einen gegen diese Nut zum Tiefziehen geführten Aussenstempel;

Fig. 5 eine Profildarstellung in axialer Draufsicht auf ein Ausführungsbeispiel eines Aussenstempels und eines Schlitzstempels;

Fig. 6 einen axialen Schnitt durch einen Teil der Bechergehäusewandung mit entsprechender Sollberststelle, die mittels der Vorrichtung nach Fig. 4 hergestellt ist;

Fig. 7 einen radialen Schnitt durch eine Sollberststelle längs der Linie II-II nach Fig. 6;

Fig. 8 einen radialen Ausschnitt im Bereich der Sollberststelle ähnlich dem Beispiel nach Fig. 7, jedoch mittels einer Vorrichtung nach Fig. 9 hergestellt;

Fig. 9 eine perspektivische Ansicht eines Teils eines anderen Ausführungsbeispiels eines Haltedorns mit gegen die Nut gerichtetem Aussenstempel zur Herstellung einer Sollberststelle nach Fig. 8;

Fig. 10 einen Teilschnitt in axialer Ansicht eines weiteren Haltedorns mit einem geänderten Schlitzstempel;

Fig. 11 eine schematische Darstellung der gesamten Vorrichtung mit Schnittdarstellung eines Bechergehäuses;

Fig. 12 das mit einer Vorrichtung nach Fig. 10 hergestellte Kondensatorbechergehäuse im Axialschnitt durch die Sollberststelle; und

Fig. 13 einen Radialschnitt durch das Bechergehäuse nach Fig. 12 entlang der Linie III-III.

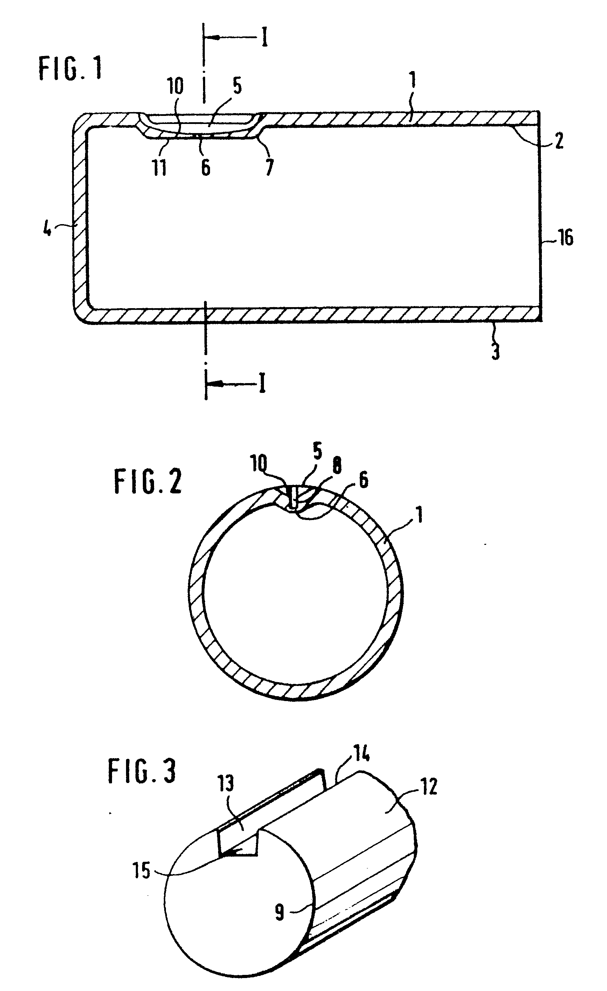

In Fig. 1 ist ein axial im Bereich einer Sollberststelle 6 geschnittenes Kondensatorbechergehäuse 1 dargestellt. Das Bechergehäuse 1 besteht vorzugsweise aus Aluminium und ist selbst mit einem angeformten Boden 4 in einem Tiefziehprozess hergestellt. Das Bechergehäuse 1 kann beispielsweise einen Durchmesser von etwa 12 mm haben, wobei die Wandstärke zwischen Innenwand 2 und Aussenwand 3 dann etwa 0,35 mm beträgt. Im Ausführungsbeispiel nach Fig. 1 hat das Bechergehäuse 1 eine längliche Zylinderform. In der in Fig. 1 obenliegenden Becherwandung ist in einem Abstand zum Boden 4 ein axial verlaufender Tiefziehbereich 5 zur Achse des Bechergehäuses 1 mit tiefgezogener Wandschwächung ausgebildet. Der Tiefziehbereich 5 beginnt in einem fertigungstechnisch gut zu beherrschenden Abstand vom Boden 4, der etwa 2 bis 3 mm betragen kann. Die Anbringung des Tiefziehbereiches für die Wandschwächung kann jedoch auch im Beispiel nach Fig. 1 axial verschoben zur Becheröffnung 16 vorgesehen sein.

Der Tiefziehbereich 5 erstreckt sich im Ausführungsbeispiel nach Fig. 1 etwa über eine Länge von 5 bis 7 mm. Die radiale Tiefe des Tiefziehbereiches 5 zwischen der Innenwandung des Bechergehäuses 1 und der Innenwandung 11 der Sollberststelle beträgt etwa 0,3 mm. Die Sollberststelle 6 selbst, die vorzugsweise in der Mitte der axialen Wandschwächung vorgesehen ist, hat etwa 0,12 bis 0,13 mm Restwandstärke, wobei der Berstdruck dann im Bereich von etwa 14 ± 2 bar liegt.

In der Darstellung nach Fig. 1 ist die Wandschwächung so geformt, dass die Innenwandung 11 der Sollberststelle 6 etwa als geradlinig und parallel zur Achse des Bechergehäuses 1 verlaufend angesehen werden kann. Das von aussen eingeprägte bzw. eingeschnittene Profil ist dabei von aussen betrachtet konvex nach innen zur Achse ausgebildet. Die hierdurch gebildete Aussenwandung der Sollberststelle 10 ist etwa in der Mitte axial zur Länge der Wandschwächung am schwächsten im Sinne einer minimalen Restwandstärke gestaltet. Die Randbereiche des Tiefziehbereiches gehen mit Rundungen 7 in die normale Becherwand über. Nach aussen gerichtete Materialwülste treten bei diesem Bechergehäuse nicht auf. Die in der Relation zum Durchmesser des Bechergehäuses 1 stark hervorgehobene Tiefziehkonfiguration weist dabei eine Innenausbauchung von etwa 0,3 mm gegenüber der Innenwand auf. Unter Berücksichtigung von fertigungstechnisch anderweitig verursachten Ziehriefen, die etwa 10 bis 15% der Wandstärke betragen, stellt der Tiefziehbereich 5 keinerlei Behinderung für die weitere Montage des eigentlichen Kondensators dar.

Der radiale Schnitt nach Fig. 2 geht durch die Sollberststelle 6 und zeigt die relativ schwache Ausprägung des Tiefziehbereiches 5, wobei die Breite ungefähr 1,5 mm beträgt. In der Breite wird hierbei die Strecke zwischen den Innenwandteilen verstanden, die gegenüber dem normalen Innenwanddurchmesser des Bechergehäuses 1 nach innen zur Achse gerichtet abweichen.

Das Profil der Wandschwächung im radialen Schnitt nach Fig. 2 weist von aussen zur eigentlichen Sollberststelle 6 hin zunächst eine leichte etwa keilförmige Einbauchung auf, die primär vom Tiefziehvorgang herrührt. In der Mitte des Tiefziehbereiches 5 ist zur Erzeugung der Sollberststelle 6 eine Schlitz-Vertiefung 8 vorgesehen, die im wesentlichen eine relativ spitze Trapezkonfiguration aufweist. Im radialen Schnitt nach Fig. 2 ist erkennbar, dass die Aussenwandung 10 der Sollberststelle einen kurzen, gerade verlaufenden Flächenbereich bildet. Dieser geradlinig verlaufende Flächenbereich der Aussenwand 10 der Sollberststelle stellt die eigentliche Sollberststelle dar und kann hinsichtlich der gewünschten Restwandstärke in Abhängigkeit vom Sollberstdruck fertigungstechnisch sehr gut realisiert werden.

In Fig. 3 ist eine Teillänge eines Haltedorns 12 gezeigt. Dieses Teilstück stellt das beispielsweise bis zum Boden 4 nach Fig. 1 eingeschobene Stück des gesamten Haltedornes 12 dar. Im nach oben zeigenden Bereich des Haltedornes 12 ist eine U-förmige Nut 13 mit einem Nutboden 15 ausgebildet. Diese Nut 13, die über die gesamte Länge des Haltedorns 12 gehen kann, muss mindestens aber im Tiefziehbereich 5 des Bechergehäuses 1 vorgesehen sein. Der Haltedorn 12 ist mit Ausnahme der Nut 13 zylindrisch gestaltet. Die oberen Nutränder 14 gehen in dieser Ausführungsform relativ kantig in die angrenzenden Flächen bzw. den Umfangskreis 9 über. Diese Nutränder können jedoch auch entsprechend den gewählten Wandstärken der Bechergehäuse abgerundet ausgebildet sein.

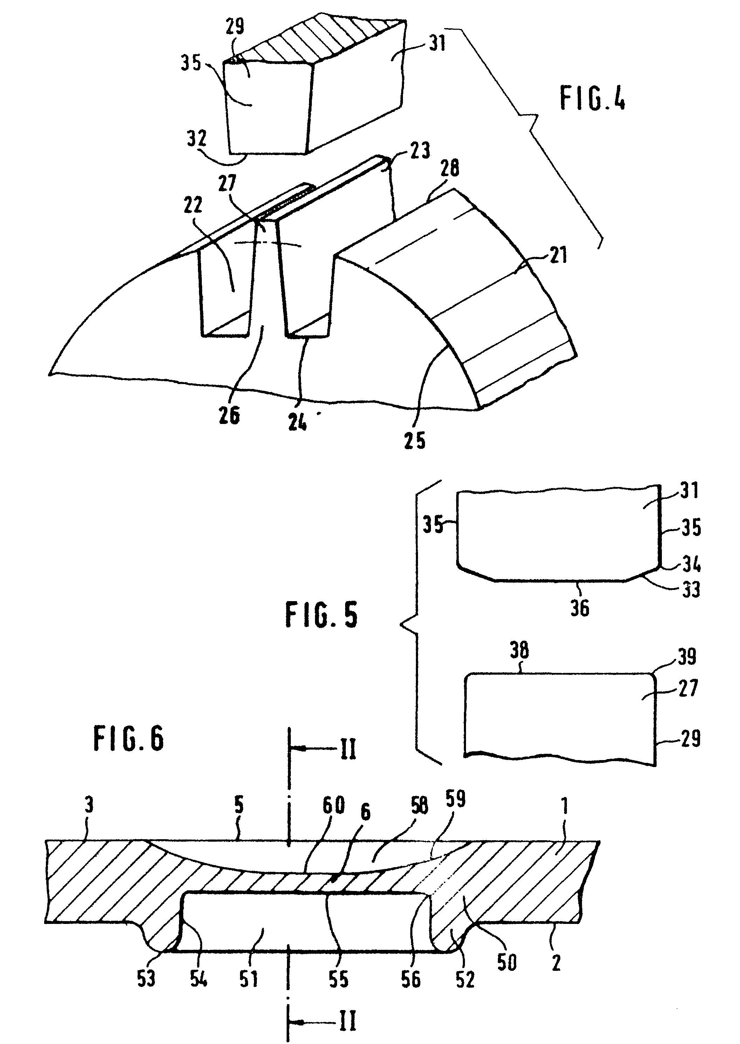

Fig. 4 zeigt einen Ausschnitt aus einer anderen Ausführungsform eines Haltedorns 21. In dieser Figur ist der von oben das Tiefziehen bewirkende Aussenstempel 31 mit dargestellt. Der Haltedorn 21 ist abgesehen von der speziellen Konfiguration innerhalb der Nut wie der Haltedorn 12 nach Fig. 3 geformt. Innerhalb der Nut ist in der Mitte des Nutbodens 24 ein in Längsrichtung der Nut 22 verlaufender Schlitzstempel 27 vorgesehen. Der Schlitzstempel 27 weist insgesamt eine leichte nach oben, d.h. nach radial aussen, verjüngend zulaufende Keilform auf. Die Höhe des Schlitzstempels 27, gemessen von seinem Schlitzstempelfuss 26 am Nutboden 24 bis zu seinem Kopf 23, ist in diesem Ausführungsbeispiel grösser als die Nuthöhe. Der Schlitzstempel 27 überragt daher den oberen Nutrand 28 bzw. den Umfangskreis 25 des Haltedorns um beispielsweise 0,1 mm.

Der gegen den Schlitzstempel 27 von oben wirkende Aussenstempel 31 ist an seiner Schmalseite 29, d.h. an seinem Kopf 32, breiter als der über die Nut hinausragende Kopf 23 des unteren Schlitzstempels. Beispielsweise beträgt die Breite des Kopfes 32 etwa 0,5 mm, während die Breite des unteren Kopfes 23 im Bereich von etwa 0,1 bis 0,2 mm liegen kann.

Obwohl nach Fig. 4 sowohl der untere Schlitzstempel 27 als auch der obere Aussenstempel 31 im wesentlichen als keilförmig in einer Fläche zulaufend dargestellt sind, können beide Stempel an ihrem Kopfende nochmals trapezförmig ausgebildet sein. Sie werden dann zu ihrem Ende hin noch stärker verjüngend abgekeilt bzw. zugespitzt sein.

In Fig. 5 ist eine seitliche Draufsicht auf die einander gegenüberstehenden Aussenstempel 31 und den unteren Schlitzstempel 27 dargestellt. Während der untenliegende Schlitzstempel 27 eine nahezu geradlinige Kopffläche 38 als Schneidkante oder Schlitzkante aufweist, ist der das Tiefziehen der Becherwandung bewirkende obere Aussenstempel 31 mit an den axialen Rändern leicht nach oben verlaufenden Abschrägungen 33 gestaltet. Der Kopf 32 des Aussenstempels 31 weist dabei einen linearen Mittelbereich 36 auf, der etwa über die halbe Länge des Aussenstempels verlaufen kann. Dieser lineare Mittelbereich 36 kann auch jedoch wesentlich kürzer sein, wobei die Länge des Mittelbereiches 36 die Länge der Sollberststelle, d.h. den dünnsten Wandungsbereich, bestimmt. Der Übergang von den Abschrägungen 33 in die Schmalseiten 35 des Aussenstempels 31 erfolgt dabei in Form eines Radiusübergangs 34.

Der unten angeordnete Schlitzstempel 27 ist über seine gesamte Länge an der Schneidkante geradlinig ausgebildet und geht relativ kantig, vorzugsweise jedoch auch mit einer sehr kleinen Abrundung 39 in die seitliche Schmalseite über.

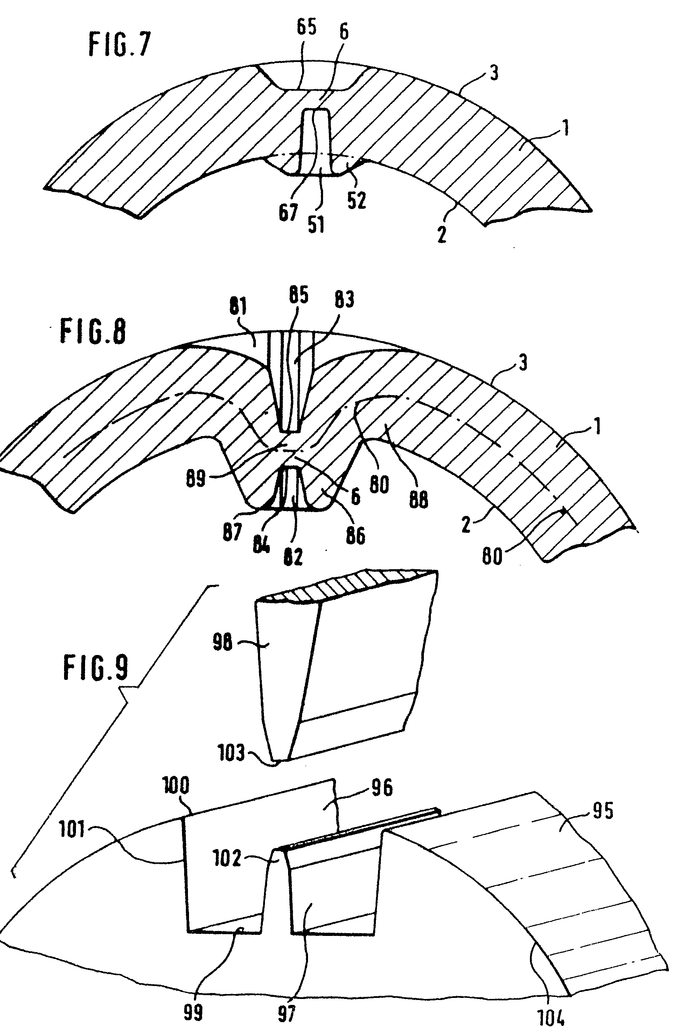

Fig. 6 und 7 zeigen das axiale bzw. radiale Schnittprofil einer mit der Vorrichtung nach Fig. 4 und 5 hergestellten Sollberststelle eines Bechergehäuses. Hierzu wird ein Bechergehäuse in der Art, wie es in Fig. 1 dargestellt ist, maschinell oder manuell auf den in Fig. 4 gezeigten Dorn 21 aufgezogen. Das Aufziehen auf den Haltedorn 21 kann dabei trotz leicht überstehenden Schlitzstempels 27 über den Umfangskreis des Haltedorns hinaus durchgeführt werden, da bei einem Durchmesser des Bechergehäuses von etwa 12 mm zwischen der Innenwandung 2 des Bechergehäuses und der Umfangswandung des Haltedorns 21 ein Spiel von etwa 1 mm besteht.

Das zwischen dem Schlitzstempel 27 und dem oberen Aussenstempel 31 auf den Haltedorn 21 aufgezogene Bechergehäuse 1 wird dadurch tiefgezogen, dass der Aussenstempel 31 abgesenkt wird. Hierdurch wird das relativ leicht fliessende Aluminium des Bechergehäuses in die Nut 22 des Haltedorns 21 um den Schlitzstempel 27 herum tiefgezogen. Im Tiefziehprozess gelangt der innerste Wandungsbereich des ursprünglich sehr genau zylindrischen Bechergehäuses bis zum Nutboden 24. Auf der Aussenseite des Bechergehäuses verbleibt nach dem Tiefzieh- und Schlitzvorgang eine äussere Vertiefung 58, wie sie in Fig. 6 dargestellt ist.

Trotz der nach unten über die Innenwand 2 hinausragenden Wülste 52 der unteren Schlitzkontur 51 um maximal 0,3 mm ist auch nach dem Tiefziehen das Abstreifen des Bechergehäuses vom Haltedorn 21 fertigungstechnisch möglich. Hierzu bedarf es lediglich eines leichten Anhebens des gesamten Bechergehäuses, wobei dann das Spiel von etwa 1 mm zwischen Innenwand des Bechergehäuses und dem Haltedorn genutzt werden kann.

Der Tiefziehbereich 50 nach Fig. 6 weist im axialen Schnitt eine nahezu rechteckige untere Schlitzkontur 51 auf, wobei die im wesentlichen ebene Mittelfläche 55 in die nahezu radial verlaufende Seitenwand 54 durch eine Ecke 56 mit sehr kleinem Radius übergeht. Die sich durch das Tiefziehen in der Nut 22 bildenden Wülste 52 weisen einen im wesentlichen etwa parallel zur Mittelfläche 55 verlaufenden Rand 53 als innerste Begrenzung des Tiefziehbereiches 50 auf.

Die äussere Vertiefung 58 hat im wesentlichen eine zur Mitte hin leicht abgerundete Konfiguration, wobei in der Mitte normalerweise die geringste Restwandstärke für die Sollberststelle erreicht wird. Der Randbereich 59 und der Mittelteil 60 entsprechen in der Konfiguration im wesentlichen dem Profil des Aussenstempels 31 in Längsrichtung.

Durch das Tiefziehverfahren mit kombinierter Schlitzbildung werden die normalerweise bei einem reinen Stanzvorgang bewirkten Verformungsverfestigungen weitgehend vermieden.

Wulstbildungen radial nach aussen, die für eine automatische Fertigung störend sind, treten hierbei nicht auf. Zum anderen ist durch den von unten wirkenden Schlitzstempel 27 das Materialfliessen in den Randbereichen sehr gering gehalten, so dass auch hierdurch Verformungsverfestigungen weitgehend unberücksichtigt bleiben können. Die auf diese Weise hergestellte Sollberststelle 6 kann daher mit im Vergleich zum bisherigen Verfahren wesentlich stärkerer Restwanddicke hergestellt werden. Dies bedeutet eine grössere Betriebssicherheit für den gesamten Kondensator.

Fig. 7 zeigt die in Fig. 6 axial dargestellte Berststelle in einem radialen Schnitt. Der das Tiefziehen bewirkende Aussenstempel 31 hat hierbei in der äusseren Vertiefung 58 eine wesentlich breitere Sohle 65 eingeformt. Auf der inneren Seite ist die schlitzartige Vertiefung 51 dargestellt, die nach radial aussen an einer inneren Sohle 67 endet. Diese Vertiefung kann stärker als in der Fig. 7 gezeigt trapezartig geformt sein. In dieser Ausführungsform ragt die Sohle 67 über den Innendurchmesser der Innenwand 2 in die eigentliche Wandstärke des Bechergehäuses 1 hinein. Die Breite der inneren Sohle 67 ist dabei etwa zwei- bis viermal geringer als die Breite der äusseren Sohle 65.

In Fig. 8 ist ein radialer Schnitt durch die Sollberststelle 6 dargestellt, wie sie mit Hilfe der in Fig. 9 gezeigten Vorrichtung halten wird.

Die Vorrichtung nach Fig. 9 weist einen Haltedorn 95 auf, der ähnlich wie die vorhergenannten Haltedorne aufgebaut ist. Der Haltedorn 95 unterscheidet sich dagegen durch den unteren Schlitzstempel 97 von den anderen Ausführungsformen. Dieser Schlitzstempel 97, der mittig in der Längsrichtung der Nut 96 angeordnet ist, weist einen trapezförmig verjüngend zulaufenden Schneidenkopf 102 auf. Das als schmale geradlinige Fläche gestaltete obere Ende des Schneidenkopfes 102 hat in axialer Ansicht, also von der Schmalseite, eine Breite im Bereich von 0,1 bis 0,2 mm. Während die Nut 96 etwa eine Tiefe von 0,3 aufweist, ragt der Schlitzstempel 97 vom Nutboden 99 etwa um 0,1 bis 0,2 mm gemessen vom Nutboden radial zur Nutöffnung. Bevorzugt wird hierbei eine Höhe von 0,1 mm.

Der von oben wirkende Aussenstempel 98 ist im Ausführungsbeispiel nach Fig. 9 ebenfalls als Schlitzstempel gestaltet. Sein am unteren Ende zur Nut 96 zeigender Schneidenkopf 103 ist dabei breiter als der untere Schneidenkopf. Die Breite des Schneidenkopfes 103 in axialer Richtung betrachtet richtet sich nach der Wandstärke des Bechergehäuses und dem verwendeten Material. Sie wird jedoch etwas grösser als die Breite des unteren Schneidenkopfes 102 gehalten und beträgt ungefähr 0,4 mm. Breiten im Bereich von 0,15 mm bis 0,5 mm sind jedoch abhängig von den Materialdaten und Wandstärken ebenfalls realisierbar. Wieder untere Schlitzstempel 97 ist auch der obere Schlitzstempel 98 am Ende trapezförmig angeformt. Bei dieser Vorrichtung überragt die Nutkante 100, die in den Umfangskreis 104 des Haltedorns 95 übergeht, bzw. die Nuthöhe 101 den mittigen unteren Schlitzstempel 97 etwa um das ein- bis dreifache seiner Höhe.

Die mit dieser Vorrichtung herstellbare Sollberststelle 6 ist im radialen Schnitt in Fig. 8 gezeigt. Entsprechend der Vorrichtung ist auch die äussere Vertiefung 81 im mittleren Bereich als Aussenschlitz 83 geformt. Dem Schlitzboden 85 der äusseren Vertiefung 81 gegenüber liegt der innere Schlitzboden 84 des durch den unteren Schlitzstempel 87 bewirkten Innenschlitzes 82. Die Sohle des Aussenschlitzes 83 ist dabei entgegen der Darstellung nach Fig. 8 normalerweise und entsprechend der Breite des Schneidenkopfes 103 der Vorrichtung breiter als die Sohle des Innenschlitzes 82. Trotz der Bildung von Materialwülsten 86 zu beiden Seiten des Innenschlitzes 82 treten im Herstellvorgang keine wesentlichen Materialfliessbewegungen auf, so dass Formungs- und Fliessverfestigungen weitgehend vermieden werden. Wesentlich bei dieser Ausführungsform der Sollberststelle nach Fig. 8 ist jedoch, dass die neutrale Mittelfläche 80 der Becherwandung vor dem Tiefziehen, im Endzustand des tiefgezogenen und geschlitzen Bechergehäuses etwa in der Mitte der Restwandstärke 89 zwischen den Sohlen des Innen- und des Aussenschlitzes zu liegen kommt. Die etwa geradlinig verlaufenden Sohlen bilden dabei in der Längsmitte der Wandschwächung eine gleichmässig starke Restwand, die als Sollberststelle genutzt wird. Die auf diese Weise durch Tiefziehen und beidseitiges Schlitzen erzeugte Sollberststelle 6 weist eine gut definierbare, relativ starke Restwandstärke von etwa 0,12 mm auf. Materialverfestigungen in den Randbereichen des Bechergehäuses oder durch Fliessen des Materials bzw. durch Materialverformungsvorgänge können dabei im wesentlichen unberücksichtigt bleiben.

Die Sohle des Innenschlitzes 82 liegt in dieser Ausführungsform gegenüber der Innenwandung 2 des Bechergehäuses 1 leicht radial nach innen versetzt, was auf die Höhe des Schlitzstempels 97 zurückzuführen ist. Die im wesentlichen durch das Tiefziehen geformten Wülste 86 zu beiden Seiten des Innenschlitzes 82 ragen etwa um 0,1 bis 0,3 mm in den Innenraum des Bechergehäuses hinein und sind unter Berücksichtigung der fertigungstechnisch in der Wandung des Bechergehäuses vorhandenen Ziehriefen nicht problematisch. Mit dieser Ausführungsform wird eine innerhalb des Ziehbereiches 88 von etwa 1,5 mm Breite liegende Sollberststelle 6 mit nahezu konstanter Restwandstärke erreicht. Die ursprünglich neutrale Mittelfläche 80 der Becherwand erhält bei diesem Herstellungsverfahren einen nur relativ leicht gekrümmten Verlauf, was zur Festigkeit des Bechergehäuses, aber auch zur guten Einstellbarkeit der Sollberststelle mit beiträgt.

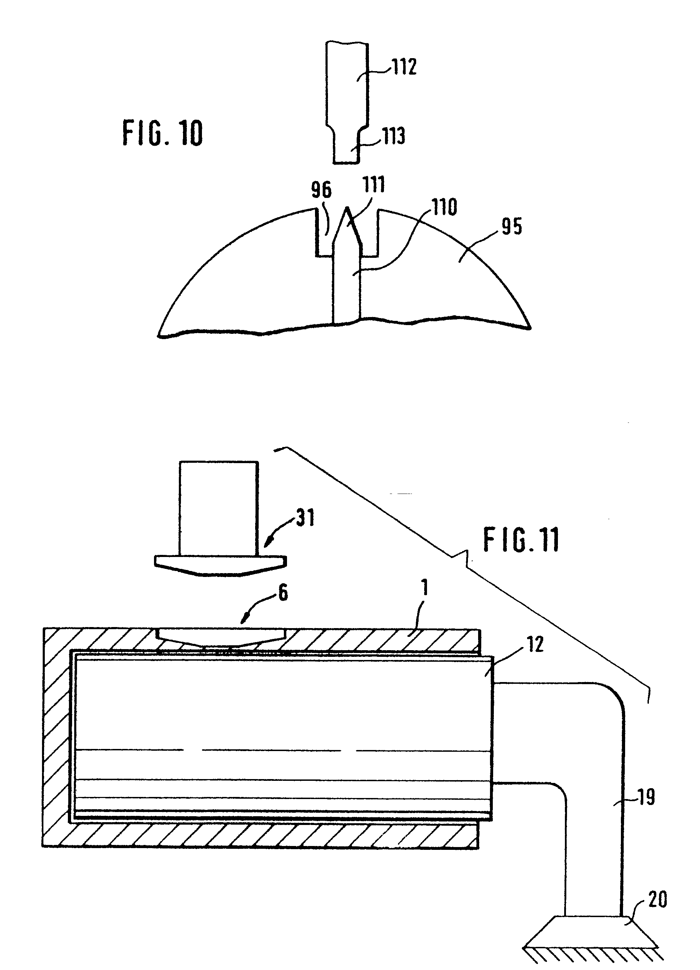

Fig. 10 zeigt eine andere Ausführungsform eines Schlitzstempels. Der Schlitzstempel 110 ragt keilförmig in der Nut 96 mit seiner Keilspitze 111 nach oben. Die Keilspitze 111 kann dabei etwa 0,15 mm unterhalb des Aussenradius des Haltedorns 95 enden. Vorzugsweise beträgt die Breite des Schlitzstempels etwa 0,7 mm bei einer Nutbreite von etwa 1,5 mm und einer Nuttiefe von etwa 1,2 mm.

Der Tiefziehkopf 113 des Aussenstempels 112 weist in axialer Ansicht einen zum Schlitzstempel 110 gerichteten Vierkantbereich mit einer Breite von etwa 0,5 mm auf, der mit einem sich kurvenförmig verbreiternden Bereich in den oberen Hauptteil des Aussenstempels 112 übergeht. Mit dieser Vorrichtung lässt sich eine innen keilförmig geschlitzte Sollberststelle 6 erzeugen.

Bei Verwendung der Vorrichtung nach Fig. 10 würde das Bechergehäuse 1 nach Fig. 7 oder 8 an der Sollberststelle 6 einen keilförmigen Innenschlitz aufweisen, so dass es auch als mit einem Seitenschlitzventil 6 versehen bezeichnet werden kann.

Fig. 11 zeigt in schematischer Darstellung die gesamte Vorrichtung, wobei der Haltedorn 12 über eine stangenartige Halteeinrichtung 19 und einen Befestigungsfuss 20 z.B. fest auf einer Werkbank oder Arbeitsfläche installiert ist. Zur Verdeutlichung einer Art der Sollberststelle 6 ist das Bechergehäuse 1, das auf den Haltedorn 12 aufgezogen ist, geschnitten dargestellt. In Fig. 11 ist der Aussenstempel 31 bereits nach dem Tiefzieh- und Schneidvorgang wieder angehoben, so dass das Bechergehäuse 1 mit der Sollberststelle 6 vom Haltedorn abgezogen werden kann.

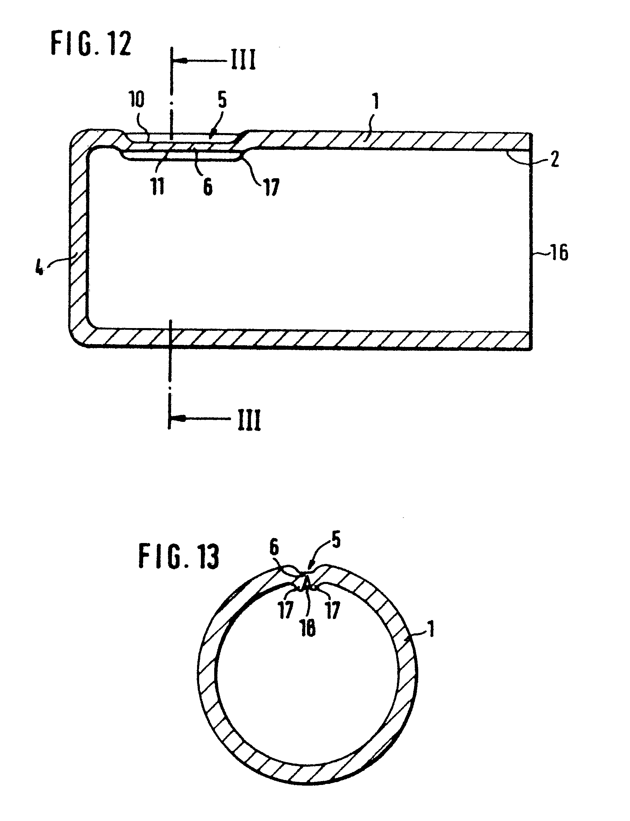

Das im Axialschnitt in Fig. 12 und im Radialschnitt längs der Schnittlinie III-III dargestellte Bechergehäuse 1, dessen Sollberststelle 6 mit einer Vorrichtung nach Fig. 10 hergestellt werden kann, unterscheidet sich von dem Bechergehäuse nach Fig. 1 und 2 grundsätzlich dadurch, dass die Becherwandung im Tiefziehbereich 5 auch von innen heraus durch den inneren Schlitzstempel 110 und seine Keilspitze 111 geschlitzt ist. Wie im Radialschnitt nach Fig. 13 erkennbar, werden beim Herstellungsverfahren mit der Vorrichtung nach Fig. 10 beidseitig von einem scharf keilförmig ausgebildeten Innenschlitz 18 Randwülste 17 gebildet, die aufgrund des Tiefziehverfahrens mit parallel erfolgendem Schneiden von radial innen entstehen. Im Vergleich zu dem Bechergehäuse nach Fig. 1 lässt sich die Restwandstärke an der Sollberststelle 6 bei der Erzeugung mittels einer Vorrichtung nach Fig. 10 stärker ausbilden, so dass fertigungstechnisch über die genauer zu bestimmende Restwandstärke auch der Sollberstdruck präzise eingestellt werden kann.

**Patentansprüche**

1. Kondensatorbechergehäuse aus fliessfähigem Werkstoff, insbesondere Aluminium, mit einer schlitzartigen Wandschwächung als Sollberststelle, dadurch gekennzeichnet, dass die Sollberststelle (6) in einem zur Längsachse des Bechergehäuses (1) gerichteten Tiefziehbereich (5) mit mindestens einer axial gerichteten radialen Vertiefung (8, 51, 82, 83) ausgebildet ist.

2. Kondensatorbechergehäuse nach Anspruch 1, dadurch gekennzeichnet, dass die Aussenwandung (10, 58) der Sollberststelle (6) im axialen Schnitt von aussen betrachtet konvex und die Innenwandung (11, 55) geradlinig geformt ist.

3. Kondensatorbechergehäuse nach Anspruch 1 oder 2, dadurch gekennzeichnet, dass die Sollberststelle (6) im radialen Schnitt eine äussere Vertiefung (58) mit breiterer Sohle (65) und eine im wesentlichen radial nach aussen gegen die äussere Vertiefung weisende innere Vertiefung (51) mit schmalerer Sohle (67), insbesondere einen keilförmigen Innenschlitz (18), aufweist.

4. Kondensatorbechergehäuse nach einem der Ansprüche 1 bis 3, dadurch gekennzeichnet, dass die Sohle (67) der inneren Vertiefung (51) radial nach aussen im Bereich zwischen dem Innen- und dem Aussenradius der Becherumfangswandung (2, 3), vorzugsweise bei einem um etwa 0,1 mm grösseren Radius als der Innenradius, vorgesehen ist.

5. Kondensatorbechergehäuse nach einem der Ansprüche 1 bis 3, dadurch gekennzeichnet, dass die Sohle (84) der inneren Vertiefung (82) innerhalb des Innenradius der Becherumfangswandung (2, 3), vorzugsweise bei einem etwa um 0,15 mm kleineren Radius als der Innenradius, vorgesehen ist.

6. Kondensatorbechergehäuse nach einem der Ansprüche 1, 2, 4 oder 5, dadurch gekennzeichnet, dass die Sollberststelle (6) durch zwei radial gegeneinander stehende schlitzartige Vertiefungen (82, 83) gebildet ist, und dass die Sohlen (84, 85) der Vertiefungen (82, 83) etwa gleiche Breite aufweisen.

7. Kondensatorbechergehäuse nach Anspruch 6, dadurch gekennzeichnet, dass die Vertiefungen (82, 83) so angeordnet sind, dass die neutrale Mittelfläche (80) der Becherwand, die vor dem Tiefziehen in der Mitte der Bechermantelwand liegt, im Endzustand etwa die Wandstärkenmitte (89) der Sollberststelle (6) bildet.

8. Verfahren zur Herstellung des Kondensatorbechergehäuses mit Sollberststelle nach einem der Ansprüche 1 bis 7, wobei das Bechergehäuse auf einem Haltedorn aufgezogen wird und zur Schaffung einer Wandschwächung mit einem axial konvexen Formgebungswerkzeug von aussen eine Vertiefung in die Gehäusewand geformt wird, dadurch gekennzeichnet, dass die Gehäusewand im Bereich der Sollberststelle tiefgezogen wird und mindestens auf einer tiefgezogenen Gehäusewandseite ein Schlitz geformt wird.

9. Verfahren nach Anspruch 8, dadurch gekennzeichnet, dass unter eine Schlitzbildung in beiden Gehäusewandseiten tiefgezogen wird.

10. Vorrichtung zur Durchführung des Verfahrens nach einem der Ansprüche 8 und 9, mit einem Aussenstempel und einem im wesentlichen zylindrischen Haltedorn für das Bechergehäuse als Innenstempel, dadurch gekennzeichnet, dass der Haltedorn (12, 21, 95) eine Nut (13, 22, 96) über einen Teil seiner axialen Länge oder über die gesamte axiale Länge aufweist.

11. Vorrichtung nach Anspruch 10, dadurch gekennzeichnet, dass der Aussenstempel (31, 98) einen Kopf (32, 103) mit geringerer Breite als die Breite der Nut (13, 22, 96) am Umfangskreis (9, 25, 104) des Haltedorns (12, 21, 95) aufweist.

12. Vorrichtung nach einem der Ansprüche 10 oder 11, dadurch gekennzeichnet, dass die Nut (22, 96) als Innenstempel einen im wesentlichen mittig angeordneten radial stehenden und axial verlaufenden Schlitzstempel (27, 102) nach Art einer Schlitzstanzschneide aufweist.

13. Vorrichtung nach Anspruch 12, dadurch gekennzeichnet, dass der Schlitzstempel (27) über den Umfangskreis (25) des Haltedorns (21) radial hinausragt und dass der Kopf (32) des Aussenstempels (31) breiter als der Kopf (27) des Schlitzstempels (23) ausgebildet ist.

14. Vorrichtung nach Anspruch 12, dadurch gekennzeichnet, dass der Schlitzstempel (97) unterhalb des Umfangskreises (104) des Haltedorns (95), insbesondere etwa bei ⅓ der Höhe oder halber Höhe der Nut (96), endet, und dass der Aussenstempel (98) auch als Schlitzstempel geformt ist.

15. Vorrichtung nach Anspruch 15, dadurch gekennzeichnet, dass der innere Schlitzstempel (97, 110) als Keilspitze und der Kopf (113) des Aussenstempels (112) abgeflacht gestaltet ist.

**Claims**

1. A capacitor can housing made of a ductile material, especially aluminum, comprising a predetermined burst spot, said burst spot being a groove-shaped weakening of the can wall, characterized in that said burst spot (6) is formed within a deep draw region (5) extending in the direction of the longitudinal axis of said can housing (1), said deep draw region comprising at least one axially directed radial indentation (8, 51, 82, 83).

2. A capacitor can housing according to Claim 1, characterized in that the pre-determined burst spot (6) has an outer wall (10, 58) with a concave configuration in axial section, seen from outside, and an inner wall (11, 55) with a straight configuration.

3. A capacitor can housing according to Claim 1 or 2, characterized in that the pre-determined burst spot (6) has an outer indentation (58) with a bottom (65) and an inner indentation (51) with a bottom (67), said bottom of said outer indentation being wider than said bottom of said inner indentation in radial section, said inner indentation being disposed radially outwardly against said outer indentation, said inner indentation especially being a wedge-shaped inner groove (18).

4. A capacitor can housing according to Claims 1 to 3, characterized in that the bottom (67) of the inner indentation (51) is disposed radially outwardly of the region between the inner radius and the outer radius of the circumferential surface of the can wall (2, 3), especially with a radius approximately 0.1 mm greater than said inner radius.

5. A capacitor can housing according to Claims 1 to 3, characterized in that the bottom (84) of the inner indentation (82) is disposed within the inner radius of the circumferential surface of the can wall (2, 3), especially with a radius approximately 0.15 mm smaller than said inner radius.

6. A capacitor can housing according to one of Claims 1, 2, 4 or 5, characterized in that the pre-determined burst spot (6) consists of two groove-shaped indentations (82, 83) being radially opposed to one another, the bottoms (84, 85) of said indentations (82, 83) having approximately the same width.

7. A capacitor can housing according to Claim 6, characterized in that the indentations (82, 83) are arranged such, that the neutral center surface (80) of the can wall which extends along the center of the can wall before the deep drawing forms in the formed burst spot (6) approximately the center (89) of the thickness of the can wall.

8. A method for making said capacitor can housing with a pre-determined burst spot according to Claims 1 to 7, comprising the steps of placing the can housing on a holding mandrel, and producing a weakening of the can wall by forming an indentation into the housing wall from the outside with an axially convex forming tool, characterized by deep drawing the housing wall in the region of the pre-determined burst spot and by forming a groove at least on one side of the deep drawn housing wall.

9. A method according to Claim 8, characterized by deep drawing and groove forming in both sides of the housing wall.

10. Apparatus for making a capacitor can housing according to the method of Claims 8 and 9, comprising an outer die and a substantially cylindrical holding mandrel for receiving the can housing and serving as inner die, characterized in that the holding mandrel (12, 21, 95) has a groove (13, 22, 96) extending along a part of its axial length or along the whole axial length.

11. Apparatus according to Claim 10, characterized in that the outer die (31, 98) has a head (32, 103) having a breadth which is less than the breadth of the groove (13, 22, 96), said breadth being considered at the periphery (9, 25, 104) of the holding mandrel (12, 21, 95).

12. Apparatus according to one of Claims 10 or 11, characterized in that the groove (22, 96) serving as inner die has a substantially centrally arranged, radially erecting and axially extending groove die (27, 102) in the kind of a slot stamp knife.

13. Apparatus according to Claim 12, characterized in that the groove die (27) projects radially from the periphery (25) of the holding mandrel (21) and in that the head (32) of the outer die (31) is broader than the head (27) of the groove die (23).

14. Apparatus according to Claim 12, characterized in that the groove die (97) ends below the periphery (104) of the holding mandrel (95), especially approximately at ⅓ of the height or at half height of the groove (96), and in that the outer die (98) is also formed as a groove die.

15. Apparatus according to Claim 15, characterized in that the inner groove die (97, 113) has a tapered and pointed head and in that the head (113) of the outer die (112) is flat.

## Revendications

1. Boîtier en forme de gobelet pour condensateur constitué par un matériau capable de fluer plastiquement, notamment de l'aluminium, et comportant, comme zone de rupture obligée, une partie de paroi amincie en forme d'entaille, caractérisé en ce que la zone de rupture obligée (6) est réalisée dans une zone d'emboutissage profond (5) dirigée vers l'axe longitudinal du boîtier en forme de gobelet (1) et comportant au moins un renfoncement radial (8, 51, 82, 83) orienté dans le sens axial.

2. Boîtier en forme de gobelet pour condensateur selon la revendication 1, caractérisé en ce que la paroi extérieure (10, 58) de la zone de rupture obligée (6) présente, en coupe axiale, une forme convexe à partir de l'extérieur, et en ce que la paroi intérieure (11, 55) est rectiligne.

3. Boîtier en forme de gobelet pour condensateur selon l'une des revendications 1 ou 2, caractérisé en ce que la zone de rupture obligée (6) présente, en coupe radiale, un renfoncement extérieur (58) comportant un fond assez large (65) et un renfoncement intérieur (51) orienté dans le sens radial vers l'extérieur, en direction du renfoncement extérieur, et comportant un fond plus étroit (67) lui donnant notamment la forme d'une entaille intérieure (18) en coin.

4. Boîtier en forme de gobelet pour condensateur selon l'une des revendications 1 à 3, caractérisé en ce que le fond (67) du renfoncement intérieur (51) est situé, dans le sens radial, vers l'extérieur, dans la zone comprise entre le rayon intérieur et le rayon extérieur de la paroi périphérique (2, 3) du gobelet, de préférence à un rayon supérieur de 0,1 mm environ au diamètre intérieur.

5. Boîtier en forme de gobelet pour condensateur selon l'une des revendications 1 à 3, caractérisé en ce que le fond (84) du renfoncement (82) est situé à l'intérieur du rayon interne de la paroi périphérique (2, 3) du gobelet, de préférence à un rayon inférieur de 0,15 mm au rayon intérieur.

6. Boîtier en forme de gobelet pour condensateur selon l'une des revendications 1, 2, 4 ou 5, caractérisé en ce que la zone de rupture obligée (6) est formée de deux renfoncements (82, 83) en forme d'entaille se faisant face dans le sens radial, et en ce que les fonds (84, 85) des renfoncements (82, 83) présentent à peu près la même largeur.

7. Boîtier en forme de gobelet pour condensateur selon la revendication 6, caractérisé en ce que les renfoncements (82, 83) sont disposés de telle manière que la surface médiane neutre (80) de la paroi du gobelet, qui, avant l'emboutissage profond, est située au milieu de la paroi de l'enveloppe du gobelet, se trouve, à l'état final, sensiblement au milieu (89) de l'épaisseur de paroi de la zone de rupture obligée (6).

8. Procédé pour la fabrication du boîtier en forme de gobelet pour condensateur, comportant une zone de rupture obligée selon l'une des revendications 1 à 7, dans lequel le boîtier en forme de gobelet est placé sur un mandrin de maintien, l'affaiblissement de la paroi étant obtenu en réalisant, de l'extérieur, au moyen d'un outil de formage convexe vers l'axe, un renfoncement dans la paroi du boîtier, caractérisé en ce que la paroi du boîtier est réalisée par emboutissage profond, dans la zone de rupture obligée, et en ce qu'une entaille au moins est obtenue par formage sur un côté de la paroi du boîtier réalisé par emboutissage profond.

9. Procédé selon la revendication 8, caractérisé en ce que l'emboutissage profond s'effectue avec formation d'une entaille des deux côtés de la paroi du boîtier.

10. Appareillage pour la mise en œuvre du procédé selon l'une des revendications 8 et 9, comportant un poinçon extérieur et un mandrin de maintien essentiellement cylindrique, agissant comme poinçon intérieur pour le boîtier en forme de gobelet, caractérisé en ce que le mandrin de maintien (12, 21, 95) comporte une rainure (13, 22, 96) sur une partie de sa longueur dans le sens axial, ou sur toute sa longueur dans le sens axial.

11. Appareillage selon la revendication 10, caractérisé en ce que le poinçon extérieur (31, 98) comporte une tête (32, 103) ayant une largeur inférieure à la largeur de la rainure (13, 22, 96) à la périphérie (9, 25, 104) du mandrin de maintien (12, 21, 95).

12. Appareillage selon l'une des revendications 10 ou 11, caractérisé en ce que la rainure (22, 96) comporte, comme poinçon intérieur, un poinçon à entaille (27, 102) disposé essentiellement au milieu, dans le sens radial, et orienté dans le sens axial.

13. Appareillage selon la revendication 12, caractérisé en ce que le poinçon à entaille (27) fait saillie, dans le sens radial, à partir de la périphérie (25) du mandrin de maintien (21), et en ce que la tête (32) du poinçon extérieur (31) est plus large que la tête (27) du poinçon à entaille (23).

14. Appareillage selon la revendication 12, caractérisé en ce que le poinçon à entaille (97) se termine au-dessous de la périphérie (104) du mandrin de maintien, notamment au tiers environ de la hauteur ou à mi-hauteur de la rainure (96), et en ce que le poinçon extérieur (98) présente également la forme d'un poinçon à entaille.

15. Appareillage selon la revendication 15, caractérisé en ce que le poinçon à entaille (97, 110) a l'aspect d'une pointe en forme de coin, et en ce que la tête (113) du poinçon extérieur (112) est aplatie.

FIG.1

FIG.2

FIG.3

0 084 590

FIG.4

FIG.5

FIG.6

0 084 590

FIG.7

FIG.8

FIG.9

15

FIG. 10

FIG. 11

**FIG. 12**

**FIG. 13**